# DEMANDE DE BREVET EUROPEEN

(11) **EP 1 577 456 A2**
(43) Date de publication de la demande: **21.09.2005**
(21) Numéro de dépôt: 05290386.1
(22) Date de dépôt: 21.02.2005
(51) Int. Cl.: E04B 9/00

(54) **Procédé de montage de plafond chauffant, et plafond chauffant obtenu par sa mise en oeuvre**

(30) Priorité: 27.02.2004 FR 0402062
(71) Demandeur: Acome Société Cooperative De Production, Société Anonyme, A Capital Variable, 75008 Paris (FR)
(72) Inventeur: Fillatre, Daniel, 50140 Romagny (FR); Le Noane, Georges, 50600 Virey (FR); Da Rocha, Jean-Claude, 61100 Flers (FR)
(74) Mandataire: Gorrée, Jean-Michel

(57) **Abrégé**

Procédé de montage d'un plafond chauffant, consistant à : fixer des rails (2) parallèles sous le plafond (1) ; fixer des traverses (7) entre les extrémités des rails ; monter des éléments thermo-isolantes (4) entre ou sur les rails ; mettre en place, sous les éléments thermo-isolants et les rails, un élément allongé chauffant (9) en zigzags à brins parallèles, les rebroussements (11) étant retenus dans des organes d'accrochage (12) fixés élastiquement (13) aux traverses ; approcher par le dessous des plaques de finition qui sont repoussées jusqu'au contact des rails auxquels elles sont fixées, en repoussant l'élément allongé en zigzags qui s'encastre élastiquement dans les plaques thermo-isolantes.

## Description

La présente invention concerne un procédé de montage de plafond chauffant, électrique ou hydraulique, dans un local notamment destiné à l'habitat neuf ou à la rénovation.

Le chauffage par chaleur douce rayonnante offre un grand confort dû à l'absence de convection et à l'homogénéité de rayonnement procuré par de grandes surfaces.

A ce titre les sols, les murs et les plafonds constituent des sources intéressantes pour réaliser de telles surfaces rayonnantes importantes. Les plafonds en particulier, par le fait qu'ils offrent la plupart du temps une grande disponibilité de surface, sont particulièrement attractifs, d'autant plus que leur comportement en rayonnement est très intéressant. D'autre part, dans le cas de la rénovation de locaux par exemple, il est souvent plus facile d'équiper un plafond par ajout de plaques de plâtre de finition que de rénover un sol où le problème de surépaisseur induite par une surface rayonnante peut limiter les possibilités de mise en oeuvre.

On connaît divers systèmes de plafonds chauffants, électriques ou hydrauliques.

Dans le domaine des plafonds chauffants électriques, on connaît en particulier des systèmes constitués de films chauffants à puissance constante, ces films étant disposés sur un support isolant pour former une sorte de complexe chauffant réunissant son moyen de chauffage radiant et son isolant ; ce dernier est chanfreiné pour pouvoir s'ajuster entre des rails servant généralement à installer des plaques de finition de plafond, telles que des plaques de finition en plâtre préfabriquées dont l'emploi se généralise de plus en plus dans le bâtiment et en particulier dans l'habitat individuel en neuf ou en rénovation.

Ces systèmes connus présentent toutefois certains inconvénients tels qu'un coût d'installation assez élevé dû à un soin particulier à apporter à la pose et aux nombreux raccordements électriques à opérer puisque chaque film, et donc chaque complexe chauffant, nécessite un raccordement « in situ ». Un autre inconvénient réside dans le fait qu'il s'agit d'un système à puissance constante qui ne peut donc éviter les blocages thermiques (c'est-à-dire des élévations importantes de température en cas de non diffusion de chaleur), cas certes nettement moins probable qu'au sol, mais cependant toujours possible.

Enfin la présence d'un film ayant des propriétés de réflecteur acoustique plutôt que d'absorbeur acoustique rend les plafonds ainsi équipés médiocres sur le plan acoustique, alors que la recherche d'une meilleure isolation acoustique est maintenant tout aussi importante pour le confort des bâtiments que l'isolation thermique.

Dans le domaine des plafonds chauffants hydrauliques, les solutions connues se résument à des dispositifs de tubes métalliques du type cassettes ou autres très coûteux ou à un système de type nappes de capillaires dont les inconvénients sont nombreux : risque non négligeable d'obturation des micro tubes ; pose difficile ; conductibilité médiocre dans le cas d'emploi de plaques de finition en plâtre préfabriquées.

L'invention a donc essentiellement pour but de proposer un procédé perfectionné de montage de plafond chauffant, électrique ou hydraulique, qui écarte les inconvénients énoncés plus haut et les difficultés rencontrées dans le montage des plafonds chauffants existants, qui offre une solution de pose simple et économique rendant possible leur mise en oeuvre aussi bien par des professionnels que par des amateurs bricoleurs, et, qui conduise à des plafonds rayonnants très performants dans des locaux neufs ou rénovés.

A ces fins, l'invention propose un procédé de montage de plafond chauffant dans un local qui se caractérise en ce qu'il comprend les étapes suivantes :
- fixer des rails parallèlement les uns aux autres sous le plafond du local et à distance de celui-ci, d'une façon en soit connue ;
- fixer des traverses respectives entre les rails et vers les extrémités de ceux-ci ;
- monter des moyens d'isolation thermique sur les rails ;
- mettre en place, sous l'ensemble des moyens d'isolation thermique et des rails, au moins un élément chauffant allongé conformé en zigzags dont les brins s'étendent sensiblement parallèlement aux rails, les rebroussements de l'élément allongé en zigzags étant retenus dans des organes d'accrochage fixés élastiquement auxdites traverses, l'ensemble formé par l'élément allongé en zigzags et des organes d'accrochage formant une nappe pendant sous les moyens d'isolation ;
- approcher, sous ladite nappe, des plaques de finition et repousser ces plaques de finition jusqu'au contact des faces inférieures des rails en repoussant les brins de l'élément allongé chauffant de manière qu'ils s'encastrent élastiquement dans la face inférieure des moyens d'isolation ; et
- solidariser lesdites plaques de finition auxdites faces inférieures des rails, d'une façon en soit connue.

La mise en oeuvre du procédé conforme à l'invention offre l'avantage d'être simple, avec aussi cette caractéristique intéressante que, grâce au recours à des organes d'accrochage solidarisés élastiquement aux traverses, l'élément chauffant allongé conformé en zigzags se présente, lors du montage, sous forme d'une nappe souple suspendue sous les rails et les moyens d'isolation et maintenue en tension, ce qui laisse ensuite toute latitude dans le temps pour procéder à la mise en place et à la fixation des plaques de finition.

Dans un mode de réalisation préféré, les moyens d'isolation thermique sont des plaques qui reposent sur les rails, entre ceux-ci, et qui ont leur face inférieure qui est située sensiblement au niveau de la face inférieure des rails ou légèrement en dessous de celle-ci. Ainsi, grâce à la mise en oeuvre de plaques d'isolation qui dépassent légèrement sous le niveau inférieur des rails, on est assuré que, lors de leur montage, les plaques de finition vont repousser les brins de l'élément chauffant allongé contre les faces inférieures des plaques d'isolation dans lesquelles ils vont être amenés à s'incruster, de sorte que, par répulsion élastique, ces plaques d'isolation vont maintenir l'élément chauffant allongé en contact étroit avec les plaques de finition sous-jacentes. Non seulement le processus de montage du plafond est rendu simple et accessible même à des amateurs bricoleurs, mais en outre on assure un contact étroit de l'élément chauffant avec les plaques de finition conduisant à un chauffage rayonnant plus performant.

Dans un mode de réalisation préféré en raison de sa simplicité et de sa rapidité de mise en oeuvre, les moyens d'isolation thermique sont des feuilles souples disposées en travers des rails et couvrant la surface totale du plafond. L'isolant thermique se présente alors sous la forme d'un matériau particulièrement souple disponible en rouleau.

Dans un mode de mise en oeuvre préféré en raison de sa simplicité, chaque organe d'accrochage comprend au moins une gouttière en matériau sensiblement rigide et incurvée longitudinalement qui est propre à recevoir au moins en partie un rebroussement respectif de l'élément chauffant et ladite gouttière est solidaire d'un moyen de fixation élastique fixé à une traverse. Dans un exemple possible de réalisation, la gouttière est incurvée en arc de cercle. Dans un exemple préféré de réalisation, la gouttière est sensiblement rectiligne et deux organes d'accrochage reçoivent et retiennent respectivement deux tronçons rectilignes de l'élément chauffant situés immédiatement avant et après le rebroussement ; de façon intéressante, chaque organe d'accrochage comprend une embase creusée de la susdite gouttière sensiblement rectiligne et un couvercle solidarisable à ladite embase en enserrant fermement l'élément chauffant et propre à s'étendre sur au moins une partie de l'embase ; avantageusement, le fond de la gouttière et/ou le couvercle comportent des saillies propres à agripper l'élément chauffant. De plus il est simple que le moyen de fixation élastique soit un ressort en hélice ou, en variante, soit un ruban en un matériau élastiquement déformable.

On peut améliorer la qualité du résultat obtenu en prévoyant que chaque plaque ou chaque feuille d'isolation comporte, sur sa face inférieure, une couche d'un matériau très souple propre à épouser encore plus étroitement la forme des brins de l'élément chauffant.

La mise en oeuvre du procédé conforme à l'invention reste indépendante de la nature de l'élément chauffant allongé conformé en zigzags et peut donc trouver application aussi bien lorsque l'élément chauffant est un câble électrique chauffant, de préférence du type autorégulant, que lorsqu'il est un tube courbable parcouru par un fluide caloporteur tel qu'un liquide, notamment de l'eau.

Le procédé conforme à l'invention présente l'avantage supplémentaire de permettre l'utilisation de plaques de finition en plâtre qui sont bien connues maintenant dans le domaine du bâtiment. Leur très grande diffusion dans le marché du bâtiment a eu pour incidence une baisse sensible de leur coût de production, de sorte que les professionnels du bâtiment ont eu largement recours à ce produit et ont acquis un savoir-faire important aussi bien pour la construction neuve que pour la rénovation.

De plus, cette grande diffusion de ce type de plaque de finition et ce savoir-faire ont eu pour effet d'entraîner une normalisation de fait, en particulier pour la fixation des rails porteurs dont une valeur unifiée d'espacement est actuellement respectée par les professionnels, ce qui autorise une mise en place facile et précise des plaques d'isolation et/ou des éléments chauffants entre ces rails.

L'invention entend également proposer un plafond chauffant obtenu par mise en oeuvre du procédé de montage exposé ci-dessus.

L'invention sera mieux comprise à la lecture de la description détaillée qui suit de certains modes de mise en oeuvre préférés donnés uniquement à titre d'exemples purement illustratifs. Dans cette description, on se réfère aux dessins annexés sur lesquels :
- les figures 1A à 1F sont des vues schématiques, en coupes transversales selon la ligne I-I de la figure 3, illustrant diverses étapes du procédé de montage d'un plafond chauffant conformément à l'invention ;
- la figure 2 est une vue schématique, en coupe selon la ligne II-II de la figure 3, illustrant une autre étape du procédé de l'invention ;
- la figure 3 est une vue schématique de dessus montrant en partie l'agencement d'un plafond monté selon le procédé de l'invention ;
- les figures 4A à 4C sont des vues schématiques, dérivées respectivement des figures 1B, 1E et 1F, illustrant plusieurs étapes essentielles du procédé de montage d'une variante préférée de réalisation d'un plafond chauffant conformément à l'invention ;
- les figures 5A et 5B sont des vues, respectivement de dessus et en perspective, d'un organe utilisé dans la mise en oeuvre du procédé selon l'invention ;
- les figures 6 et 7 sont des vues de dessus montrant respectivement deux variantes de réalisation de l'organe des figures 5A et 5B ; et
- les figures 8A et 8B sont des vues d'un autre mode de réalisation, qui est préféré, d'un organe utilisé dans la mise en oeuvre du procédé de l'invention, lequel organe est montré respectivement ouvert en vue en perspective et fermé autour d'un câble en vue de bout.

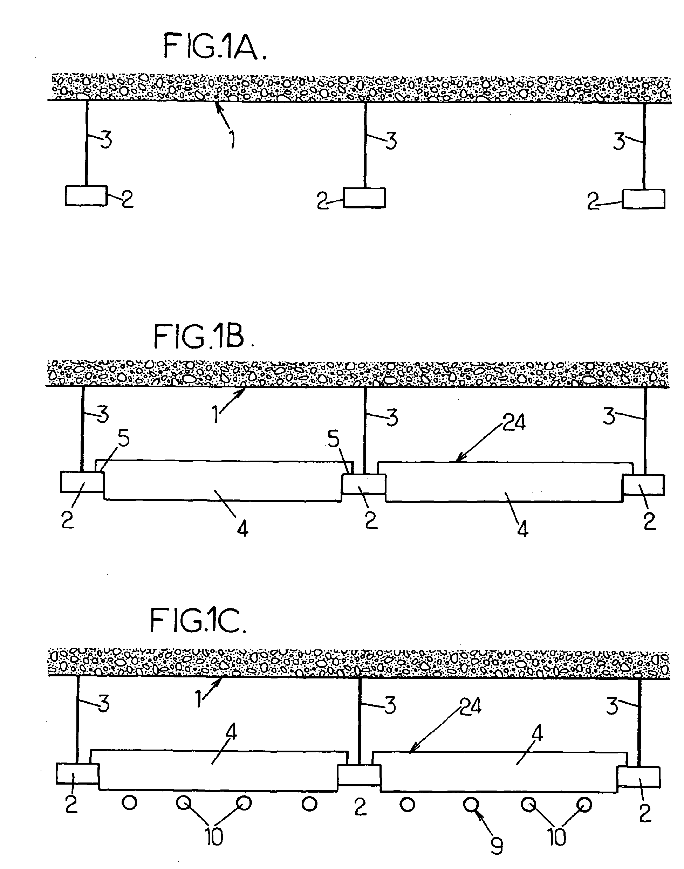

Il va maintenant être fait référence, tout d'abord, plus spécifiquement aux figures 1A-1F, 2 et 3.

Comme montré à la figure 1A, le procédé de montage de plafonds chauffants, électriques ou hydrauliques, objet de l'invention prévoît l'usage, maintenant répandu et en soi connu, de rails 2 fixés au plafond 1, à distance sous celui-ci, par l'intermédiaire de suspentes ou chandelles 3 réglables en hauteur. Les rails 2 sont avantageusement réalisés sous forme de profilés creux de section quadrangulaire (carrée ou rectangulaire) comportant une fente longitudinale dans sa paroi supérieure, fente dans laquelle sont introduites les têtes des chandelles qui sont ainsi positionnables de façon réglable longitudinalement (l'homme du métier emploie couramment le terme de fourrures pour désigner ces structures métalliques de rails et suspentes).

On fait ensuite supporter, aux rails 2, des moyens 24 d'isolation thermique constitués sous forme plate.

Dans l'exemple de réalisation montré à la figure 1B, on place sur les rails 2 et entre ceux-ci, des plaques d'isolation thermique 4 par exemple en laine de verre ou de toute autre nature, qui ont été chanfreinées bilatéralement (par exemple sous forme d'épaulements 5) de telle manière qu'elles reposent par leurs deux bords longitudinaux sur deux rails 2 consécutifs et en outre qu'elles s'étendent vers le bas au moins jusqu'à hauteur des faces inférieures des rails ; de préférence elles dépassent légèrement au-delà des faces inférieures de rails de manière à éviter la formation d'un intervalle avec les plaques de finition une fois celles-ci montées.

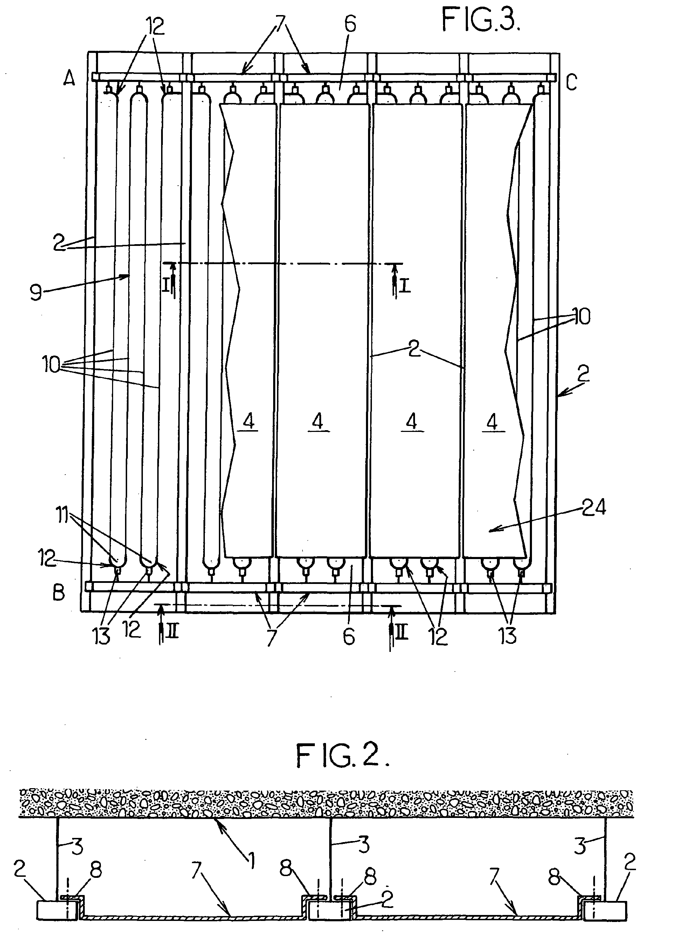

On notera que, dans cet exemple de réalisation comme visible à la figure 3, les plaques d'isolation 4 ne s'étendent pas sur la totalité de la longueur des rails 2 de sorte qu'aux deux extrémités sont réservés deux espaces libres 6 entre les rails consécutifs, espaces libres dans lesquels sont disposées des traverses 7 qui reposent sur les rails 2 par l'intermédiaire d'extrémités en décrochement 8 (figure 2). Ces traverses 7 sont fixées de toute façon appropriée (notamment par vissage) aux rails 2. Les traverses 7 peuvent être situées approximativement à hauteur des faces inférieures de rails 2, ou de préférence légèrement au-dessus de ces faces inférieures.

Comme illustré à la figure 1C, on procède ensuite à la mise en place d'au moins un élément chauffant allongé 9, qui est conformé en zigzags successifs avec des brins 10 qui s'étendent sensiblement parallèlement aux rails 2. Les rebroussements 11 de l'élément allongé 9 sont retenus dans des organes d'accrochage 12, visibles à la figure 3, qui sont fixés par des moyens de fixation élastique 13 auxdites traverses 7. Ainsi, les brins 10 de l'élément allongé conformé en zigzags sont maintenus en tension sous l'action de la fixation élastique des moyens d'accrochage 12, et l'ensemble formé par l'élément allongé en zigzags, les organes d'accrochage et les moyens de fixation élastique se présentent sous l'aspect général d'une nappe horizontale qui pend sous les plaques d'isolation et les rails, à la manière d'un hamac.

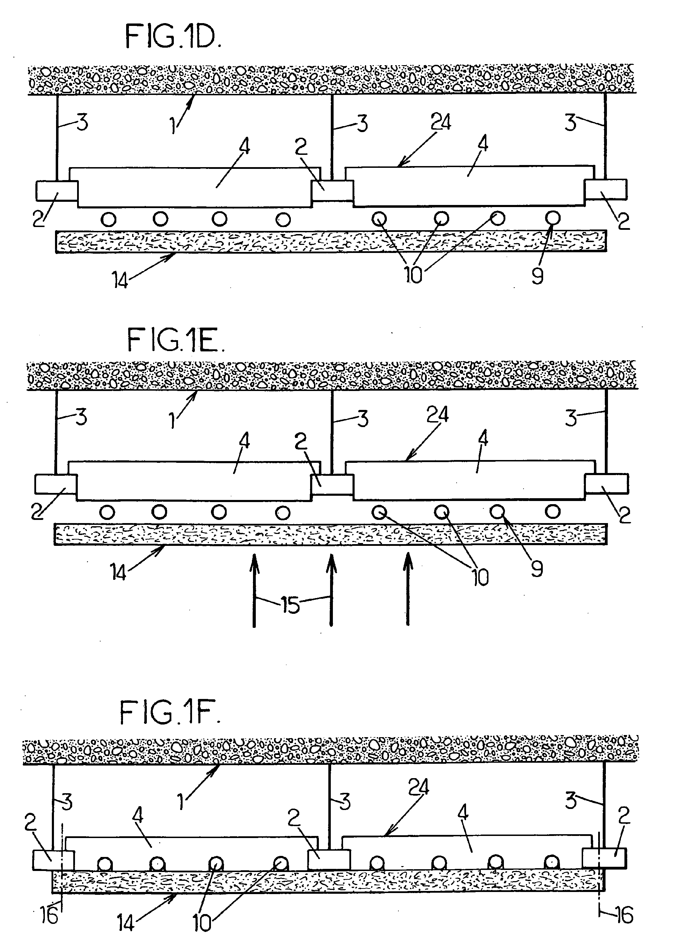

Puis, comme illustré à la figure 1D, on approche, sous ladite nappe, des plaques de finition 14. Les plaques de finition 14 peuvent avantageusement être des plaques préfabriquées en plâtre connues en soi, mais elles peuvent aussi être d'une toute autre nature.

Ensuite, comme montré à la figure 1E, on repousse (flèches 15) ces plaques de finition 14 vers le haut jusqu'à ce qu'elles viennent au contact de la face inférieure des rails 2, en repoussant ladite nappe contre la face inférieure des plaques d'isolation 4 et en outre en repoussant éventuellement élastiquement lesdites plaques d'isolation 4, de telle sorte que les brins 10 de l'élément allongé s'encastrent dans la face inférieure des plaques d'isolation 4, comme cela apparaît à la figure 1F.

Enfin, les plaques de finition 14 sont fixées de toute façon souhaitable (par exemple collage, vissage comme schématisé en 16, clipsage) aux rails 2, d'une façon en soi connue. Les plaques de finition définitivement fixées aux rails exercent une légère pression sur l'élément allongé et on obtient ainsi un sandwich chauffant très performant avec un bon recouvrement de l'élément allongé chauffant grâce à la souplesse du matériau isolant en légère pression sur cet élément chauffant, l'ensemble constituant donc un système rayonnant très économique occupant une grande surface au plafond.

On soulignera que les plaques de finition 14 fixées aux rails 2 s'étendent sur toute la surface du plafond et s'étendent donc non seulement en regard des plaques d'isolation 4, mais aussi au-delà de celles-ci en fermant les espaces vides 6 mentionnés plus haut.

Les plaques d'isolation 4 peuvent avoir un poids tel qu'en pratique elles s'opposent d'elles-mêmes à la poussée verticale ascendante exercée par les plaques de finition lors de la mise en place et de la fixation de celles-ci. Toutefois, en tant que de besoin, on peut prévoir une fixation des plaques d'isolation 4 aux rails 2 de toute façon appropriée (par exemple collage, vissage, clipsage). Sinon, les plaques d'isolation peuvent être soulevées au-dessus des rails 2, lors de la mise en place et de la fixation des plaques de finition 14, sans que cela pose problème.

On notera également que la mise en place des traverses 7 peut être effectuée aussi bien avant qu'après la mise en place des plaques d'isolation 4.

Un autre exemple, qui est préféré, de mise en oeuvre du procédé conforme à l'invention est illustré aux figures 4A à 4C. Pour éclaircir les explications, toutes les étapes illustrées aux figures 1A à 1F respectivement ne sont pas montrées à nouveau et les figures 4A à 4C correspondent seulement aux figures 1B, 1E et 1F respectivement. Sur les figures 4A-4C, les mêmes références numériques ont été conservées pour désigner les organes identiques à ceux des figures 1A-1F.

Dans cette variante préférée, les moyens 24 d'isolation thermique sont des feuilles 25 souples en matériau isolant, qui sont disponibles en rouleau. Les feuilles 25, déroulées, s'étendent en travers des rails 2 qui les supportent, d'un seul tenant selon au moins une dimension du plafond comme montré à la figure 4A. Selon l'autre dimension du plafond, plusieurs feuilles sont juxtaposées si leur largeur est moindre que ladite autre dimension du plafond, ou bien, si la largeur d'une feuille est égale à cette dimension, les moyens d'isolation thermique sont constitués d'une feuille d'un seul tenant. Cet exemple de mise en oeuvre du procédé conforme à l'invention offre donc l'avantage supplémentaire, par rapport à l'exemple précédent, que la totalité de la surface du plafond est habillée avec les feuilles d'isolation thermique, ce qui conduit à une isolation améliorée.

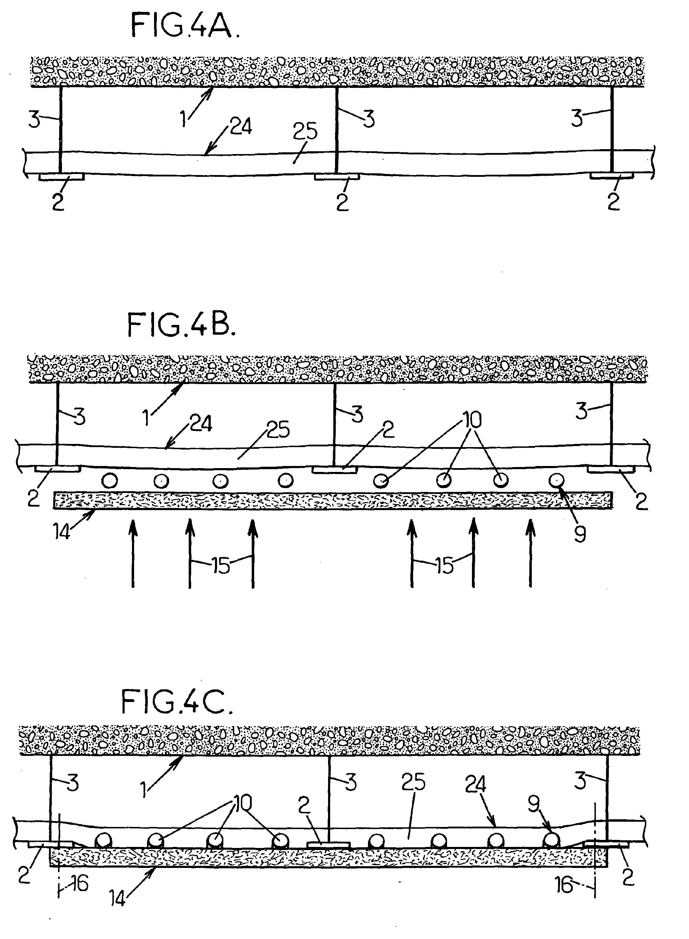

Le procédé se déroule ensuite de la même manière qu'indiqué plus haut, avec l'installation d'au moins un élément chauffant 9, la présentation des plaques de finition 14, et la poussée 15 des plaques de finition vers le haut jusqu'au contact des rails 2, en repoussant l'élément chauffant 9 dans la ou les feuilles d'isolant 25, comme montré à la figure 4B. Enfin, les plaques de finition 14 sont fixées en 16 aux rails 2, comme illustré à la figure 4C.

Cette variante préférée permet le recours à un isolant thermique disponible sous forme de feuilles de grandes dimensions, qu'il est pratique et rapide de préparer et de monter. Les temps d'installation sont ainsi écourtés et les coûts de main d'oeuvre sont réduits.

Dans l'agencement représenté à titre d'exemple à la figure 3, les organes d'accrochage 12 sont régulièrement écartés les uns des autres et sont régulièrement fixés aux traverses 7. Ainsi on obtient une répartition uniforme des brins 10 de l'élément allongé 9 sur toute la largeur du plafond chauffant qui conduit à un rayonnement uniforme de la chaleur depuis l'ensemble de la surface du plafond. Toutefois, si pour une raison déterminée, il n'est pas souhaité un rayonnement uniforme sur l'ensemble de la surface du plafond, les organes d'accrochage 12 peuvent être disposés de façon irrégulière et/ou avec un pas d'écartement localement plus important.

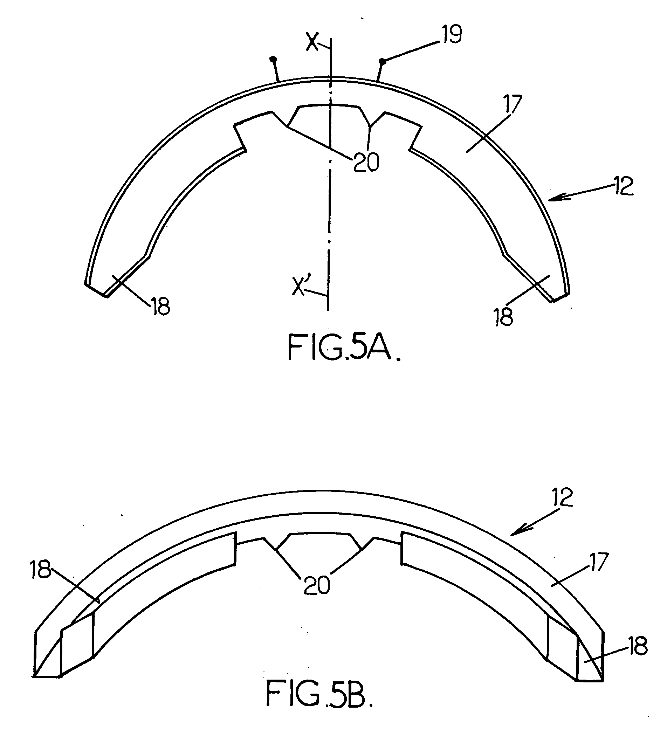

Dans un mode de réalisation illustré aux figures 5A et 5B, les organes d'accrochage 12 se présentent sous forme d'une goulotte ou gouttière 17 qui est incurvée longitudinalement et qui est propre à recevoir un rebroussement 11 de l'élément allongé 9 configuré en zigzags. Dans l'exemple montré sur ces figures, la gouttière 17 s'étend longitudinalement en arc de cercle, typiquement sensiblement sur un demi cercle, de manière à ne pas "casser" l'élément allongé à son rebroussement. Mais, bien entendu, d'autres formes non anguleuses et à courbure suffisamment ample peuvent être adoptées. On notera également que des éléments d'accrochage spécifiques, ici en quart de cercle, sont prévus aux extrémités de l'élément allongé (en A et en C sur la figure 3), ainsi que pour permettre le passage de l'élément allongé d'un côté à l'autre d'un rail.

Comme visible sur les figures 5A et 5B, les extrémités 18 de la gouttière peuvent être amincies, par exemple en faisant converger au moins une des parois latérales en direction de l'autre de manière que l'élément allongé soit quelque peu bloqué et ne puisse pas se déplacer longitudinalement dans la gouttière.

Dans le mode de réalisation illustré aux figures 5A et 5B, la gouttière 17 est pourvue d'au moins deux ergots 19 extérieurs et de deux pointes d'accrochage 20 intérieures qui ont pour fonction de maintenir des moyens de fixation élastique 13 en vue de la fixation à la traverse 7.

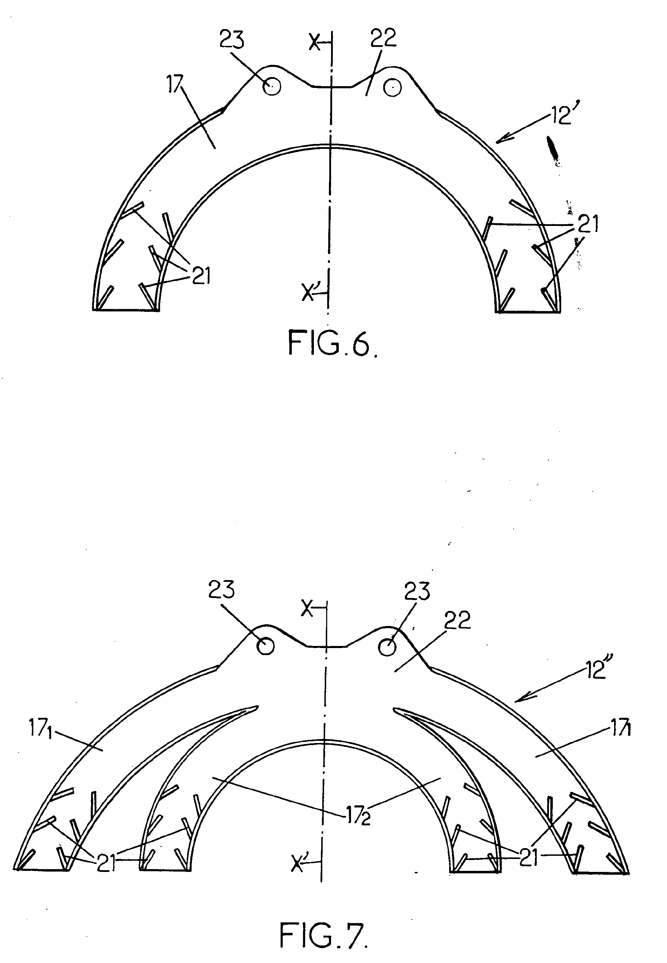

Aux figures 6 et 7 sont illustrées deux variantes de réalisation de l'organe d'accrochage montré aux figures 5A et 5B. A la figure 6, l'organe d'accrochage 12', également conformé en gouttière 17 incurvée longitudinalement en arc de cercle, comporte, vers ses extrémités, des ailettes intérieures 21 orientées vers l'intérieur et présentant une relative flexibilité, qui s'opposent au glissement de l'élément allongé engagé dans la gouttière.

De plus, l'organe d'accrochage 12' est représenté avec une variante de conformation, techniquement indépendante de la précédente, qui consiste en ce qu'il est prévu une platine 22 solidaire de la gouttière 17 et s'étendant sensiblement dans le prolongement de sa face de fond. Cette platine 22 est équipée de manière à pouvoir être solidarisée au lien élastique 13 précité ; dans l'exemple illustré à la figure 6, la platine 22 est pourvue d'au moins un trou 23 (ici deux trous) à cet effet.

La figure 7 illustre un organe d'accrochage 12" plus spécifiquement agencé pour recevoir deux éléments allongés 9 (cas mentionné plus bas de deux tubes approximativement juxtaposés). A cet effet, l'organe d'accrochage est conformé pour définir deux gouttières 17₁ et 17₂ destinées à recevoir respectivement les deux éléments allongés. Pour le reste, l'organe d'accrochage 12" est agencé de la même manière que celui 17' de la figure 6.

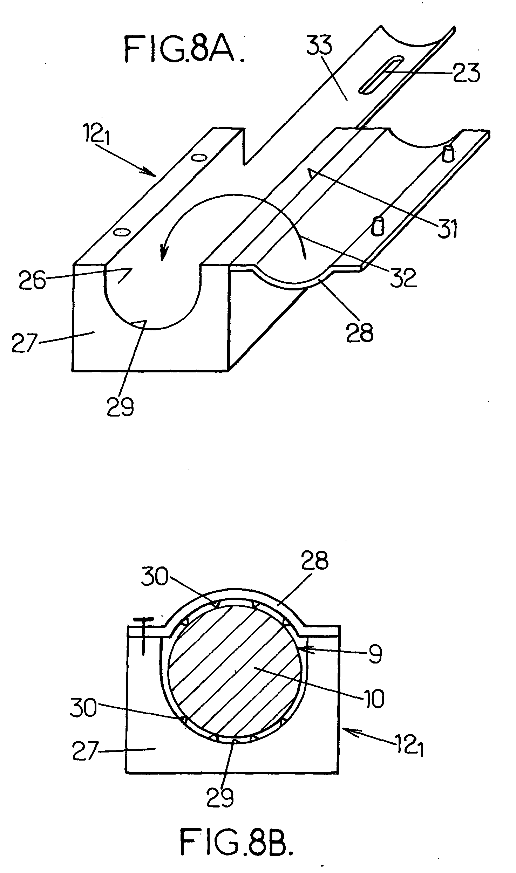

Bien que les organes d'accrochage 12 conformés en gouttière comme il vient d'être décrit soient bien appropriés pour coopérer avec les boucles formées par l'élément chauffant allongé 9, il s'agit toutefois de pièces spécifiques peu faciles à fabriquer et qui sont coûteuses. Une autre solution, qui est préférée dans le contexte de l'invention, consiste donc à mettre en oeuvre des organes d'accrochage 12₁ tels que montrés à la figure 8A qui sont conformés avec une gouttière 26 sensiblement rectiligne propre à coopérer avec une portion rectiligne de l'élément chauffant 9.

Dans un exemple de réalisation préféré, chaque organe d'accrochage 12₁ comprend une embase 27 creusée de la susdite gouttière 26 rectiligne et un couvercle 28 solidarisable à ladite embase 27 de manière à enserrer fermement une portion d'un brin 10 de l'élément chauffant 9. Ledit couvercle 28 peut avoir sensiblement la même longueur que l'embase 27, ou bien avoir une longueur moindre, ou bien former plusieurs tronçons espacés. Le couvercle 28 est avantageusement articulé en rotation en 31 par un de ses bords sur l'embase 27, de manière à pouvoir être rabattu (flèche 32) sur celle-ci.

Pour que le brin 10 de l'élément chauffant 9 soit agrippé de façon certaine, on peut prévoir que le fond 29 de la gouttière 26 et/ou la face interne du couvercle 28 comportent des saillies 30 (par exemple en forme de picots) comme visible à la figure 8B.

L'embase 27 peut en outre comporter une excroissance 33, par exemple intégrale, qui comporte une lumière 23 pour l'accrochage d'un moyen de fixation élastique.

Ainsi, deux organes d'accrochage 12₁ reçoivent et retiennent deux tronçons rectilignes de deux brins 10 respectifs de l'élément chauffant 9 qui sont situés respectivement immédiatement avant et après le rebroussement 11.

Les moyens de fixation élastique 13 peuvent être constitués de toute façon appropriée, par exemple par des rubans en un matériau élastiquement déformable ou par des ressorts en hélice, qui sont fixés d'un côté à l'organe d'accrochage (par exemple aux ergots et pointes précités de celui-ci) et de l'autre côté à la traverse 7.

La mise en place de l'élément allongé se fait de façon simple en commençant de préférence par un angle du plafond (par exemple extrémité A sur la figure 3), puis en déroulant l'élément allongé alternativement d'une extrémité à l'autre du plafond, en équipant au fur et à mesure chaque rebroussement 11 d'un organe d'accrochage qui est fixé à la traverse 7 correspondante. Le passage de l'élément allongé d'un côté à l'autre d'un rail se fait de manière telle qu'il n'en résulte pas de surépaisseur.

Tout ce travail peut être réalisé sans effort particulier et à une vitesse assez élevée pour l'homme de l'art qui, au final et pour une pièce de dimension moyenne (par exemple d'environ une quinzaine de mètres carrés), n'a plus qu'un seul branchement de raccordement à réaliser et qui peut donc ainsi préparer en un temps remarquablement court une surface rayonnante conçue avec un pas prédéterminé.

On notera que, en variante, les plaques d'isolation 4 ou les feuilles 25 peuvent recevoir, par un collage très sommaire, une couche d'un matériau mousse très souple qui viendra épouser plus facilement l'élément allongé chauffant.

D'après les explications qui précèdent, on comprend que les dispositions conformes à l'invention permettent la mise en place d'un élément allongé chauffant qui soit aussi bien un câble électrique chauffant qu'un tube parcouru par un fluide caloporteur, tel qu'un liquide et notamment de l'eau.

Dans un mode particulièrement préféré de réalisation de tels plafonds, le câble électrique chauffant utilisé est un câble du type autorégulant, c'est-à-dire un câble dont la structure intrinsèque confère un comportement autorégulant conduisant à la délivrance d'une puissance calorifique inversement proportionnelle à l'écart de température qui le sépare de son milieu extérieur. Ce câble a donc un fonctionnement tel que, lorsque la température croît dans la surface rayonnante, il diminue la délivrance de la puissance calorifique, ce qui limite naturellement son effet chauffant ; ainsi, à la différence des systèmes à puissance constante, on évite les phénomènes de blocages thermiques et donc de surchauffe locale, ce qui convient parfaitement à une élimination totale des risques de désordre des matériaux comme le plâtre pouvant constituer les plaques préfabriquées de finition.

Dans le cas d'un chauffage par circulation d'un fluide caloporteur, et plus particulièrement d'un liquide caloporteur, on peut utiliser un ou plusieurs tubes de faibles dimensions, par exemple d'un diamètre de 8/10 mm, dont la flexibilité est compatible avec une installation du type envisagé. Par mise en circulation d'une eau chauffée à moyenne température ou légèrement refroidie, il est ainsi possible de constituer soit un système chauffant seul, soit un système chauffant/rafraîchissant, l'alimentation et la régulation de tels systèmes étant par ailleurs parfaitement connues de l'homme de l'art.

La mise en oeuvre de deux tubes indépendants approximativement juxtaposés et parcourus par des circulations de fluide dans des sens inverses peut être justifiée pour l'obtention d'un chauffage plus régulier et d'une meilleure homogénéisation de la température.

## Revendications

1. Procédé de montage d'un plafond chauffant dans un local, **caractérisé en ce qu'**il comprend les étapes suivantes :
- fixer des rails (2) parallèlement les uns aux autres sous le plafond (1) du local et à distance de celui-ci, d'une façon en soit connue ;
- fixer des traverses (7) respectives entre les rails (2) et vers les extrémités de ceux-ci ;
- monter des moyens d'isolation thermique (24) sur les rails (2) ;
- mettre en place, sous l'ensemble des moyens d'isolation thermique (24) et des rails (2), au moins un élément chauffant allongé (9) conformé en zigzags dont les brins (10) s'étendent sensiblement parallèlement aux rails (2), les rebroussements (11) de l'élément allongé (9) en zigzags étant retenus dans des organes d'accrochage (12, 12', 12", 12₁) fixés élastiquement (en 13) auxdites traverses (7), l'ensemble formé par l'élément allongé (9) en zigzags et des organes d'accrochage (12, 12', 12" , 12₁; 13) formant une nappe pendant sous les moyens d'isolation ;
- approcher, sous ladite nappe, des plaques de finition (14) et repousser ces plaques de finition jusqu'au contact des faces inférieures des rails (2) en repoussant les brins (10) de l'élément allongé chauffant (9) de manière qu'ils s'encastrent élastiquement dans la face inférieure des moyens d'isolation (24) ; et
- solidariser lesdites plaques de finition (14) auxdites faces inférieures des rails (2), d'une façon en soi connue.

2. Procédé selon la revendication 1, **caractérisé en ce que** les moyens d'isolation thermique (24) sont des feuilles (25) souples disposées en travers des rails (2) et couvrant la surface totale du plafond.

3. Procédé selon la revendication 1, **caractérisé en ce que** les moyens d'isolation thermique (24) sont des plaques (4) qui reposent sur les rails, entre ceux-ci, et qui ont leur face inférieure qui est située sensiblement au niveau de la face inférieure des rails (2) ou légèrement en dessous de celle-ci.

4. Procédé selon l'une quelconque des revendications 1 à 3, **caractérisé en ce que** chaque organe d'accrochage (12, 12', 12'') comprend au moins une gouttière (17; 17₁, 17₂), en matériau sensiblement rigide et incurvée longitudinalement qui est propre à recevoir au moins en partie un rebroussement (11) respectif de l'élément chauffant (9) et **en ce que** ladite gouttière est solidaire d'un moyen de fixation élastique (13) fixé à une traverse (7).

5. Procédé selon la revendication 4, **caractérisé en ce que** la gouttière (17; 17₁, 17₂) est incurvée en arc de cercle et reçoit la totalité du rebroussement (11) respectif de l'élément chauffant (9).

6. Procédé selon la revendication 4, **caractérisé en ce que** la gouttière (26) est sensiblement rectiligne et **en ce que** deux organes d'accrochage (12₁) reçoivent et retiennent respectivement deux tronçons rectilignes de l'élément chauffant (9) situés immédiatement avant et après le rebroussement (11).

7. Procédé selon la revendication 6, **caractérisé en ce que** chaque organe d'accrochage (12₁) comprend une embase (27) creusée de la susdite gouttière (26) sensiblement rectiligne et un couvercle (28) solidarisable à ladite embase en enserrant fermement l'élément chauffant (9) et propre à s'étendre sur au moins une partie de l'embase.

8. Procédé selon la revendication 7, **caractérisé en ce que** le fond (29) de la gouttière (26) et/ou le couvercle (28) comportent des saillies (30) propres à agripper l'élément chauffant (9).

9. Procédé selon l'une quelconque des revendications 4 à 8, **caractérisé en ce que** le moyen de fixation élastique (13) est un ressort en hélice.

10. Procédé selon l'une quelconque des revendications 4 ou 9, **caractérisé en ce que** le moyen de fixation élastique (13) est un ruban en un matériau élastiquement déformable.

11. Procédé selon l'une quelconque des revendications 1 à 10, **caractérisé en ce que** chaque plaque d'isolation (4) ou chaque feuille (25) comporte, sur sa face inférieure, une couche d'un matériau très souple propre à épouser étroitement l'élément chauffant.

12. Procédé selon l'une quelconque des revendications 1 à 11, **caractérisé en ce que** l'élément chauffant allongé (9) est un câble électrique chauffant.

13. Procédé selon l'une quelconque des revendications 1 à 11, **caractérisé en ce que** l'élément chauffant allongé (9) est un tube courbable parcouru par un fluide caloporteur.

14. Plafond chauffant obtenu par mise en oeuvre du procédé de montage selon l'une quelconque des revendications 1 à 13.
